# EUROPÄISCHE PATENTANMELDUNG

(11) **EP 0 715 232 A2**
(43) Veröffentlichungstag der Anmeldung: **05.06.1996**
(21) Anmeldenummer: 95117711.2
(22) Anmeldetag: 09.11.1995
(51) Int. Cl.: G03H 1/04

(54) **Masterhologramm zur Herstellung von kopiersicheren Hologrammen**

(30) Priorität: 02.12.1994 DE 4443029
(71) Anmelder: BUNDESDRUCKEREI GmbH, D-10958 Berlin (DE)
(72) Erfinder: Dausmann, Günter, D-85435 Erding (DE); Gnädig, Klaus, Dr., D-81247 München (DE)
(74) Vertreter: Gossel, Hans K., Dipl.-Ing.

(57) **Zusammenfassung**

Die Erfindung betrifft ein Verfahren zur Herstellung von kopier- und nachahmungssicheren, Echtheitsmerkmale aufweisenden Hologrammen, die Kopien eines Masterhologramms sind. Erfindungsgemäß wird als Masterhologramm ein Hologramm eines zufällig strukturierten optischen Elements, beispielsweise einer Mattscheibe, das das Echtheitsmerkmal bildet, aufgenommen und jede von dem Masterhologramm gezogene Hologrammkopie mit einer mindestens einen Farbverlauf aufweisenden Schicht versehen und/oder die auf eine dicke lichtempfindliche Schicht aufgenommene Hologrammkopie geschrumpft oder geschwellt.

## Beschreibung

Die Erfindung betrifft ein Verfahren zur Herstellung von kopier- und nachahmungssicheren, Echtheitsmerkmale aufweisenden Hologrammen, die Kopien eines Masterhologramms sind.

Hologramme werden insbesondere in Form von Prägehologrammen zunehmend auf Ausweispapieren und zur Sicherung der Echtheit auf Markenartikeln verwendet. Ihre gewünschte Schutzfunktion können die Hologramme aber nur bieten, wenn sie auch von geschickten und geübten Fälschern nicht mit üblichen holografischen Hilfsmitteln kopiert oder nachgeahmt werden können. Es konnte nachgewiesen werden, daß derzeit übliche, als Echtheitsnachweis dienende Hologramme kopiert werden konnten.

Aufgabe der Erfindung ist es daher, ein Verfahren der eingangs angegebenen Art zu schaffen, nach dem sich kopier- und nachahmungssichere Hologramme herstellen lassen, die als Echtheitsnachweis auf Gegenständen und Dokumenten aller Art verwendet werden können.

Erfindungsgemäß wird diese Aufgabe durch die kennzeichnenden Merkmale des Patentanspruchs 1 gelöst.

Als Echtheitsnachweis dienende Hologramme müssen nicht nur kopiersicher, sondern auch nachahmungssicher sein. Nachahmungssicher bedeutet, daß sich ein Fälscher nicht ein Objekt beschafft, das dem in dem als Echtheitsnachweis dienenden Hologramm gespeicherten Objekt möglichst ähnlich ist, und von diesem sodann Hologramme erstellt, die dann die gefälschten Hologramme darstellen.

Das erfindungsgemäß in dem Masterhologramm kodierte zufällig strukturierte optische Element, beispielsweise eine Mattscheibe oder eine statistische Phasenplatte mit Zufallsverteilung der Phasenelemente, läßt sich auch von einem geschickten Fälscher nicht nachstellen, weil er hierzu das zweckmäßigerweise nach der Aufnahme vernichtete optische Element benötigt, welches aber nicht verfügbar ist und wegen seiner zufälligen Strukturen auch nicht nachträglich hergestellt werden kann.

In jedem Falle wird durch das Masterhologramm, das eine Hologrammaufnahme eines zufällig strukturierten optischen Elements ist, ein Nachahmen durch Nachstellen verhindert.

Die erforderliche Kopiersicherheit wird bei dem erfindungsgemäßen Sicherheitshologramm dadurch erreicht, daß die von dem Masterhologramm gezogene Hologrammkopie mit einer mindestens einen Farbverlauf aufweisenden Schicht versehen ist.

Anstelle der Sicherung der Sicherheitshologramme durch eine mindestens einen Farbverlauf aufweisenden Schicht gegen Kopieren, kann die erforderliche Sicherheit gegen Kopiern auch dadurch erreicht werden, daß das auf eine dicke lichtempfindliche Schicht aufgenommene Masterhologramm geschrumpft und/oder geschwellt wird. Dieses Schrumpfen und/oder Schwellen hat Farbverschiebungen in dem Hologramm zur Folge, so daß das Hologramm einfarbig nicht mehr kopiert werden kann.

Die Sicherung der Sicherheitshologramme durch eine Farbverläufe aufweisende Schicht und durch Schrumpfen und/oder Schwellen des Masterhologramms kann natürlich auch kummulativ erfolgen.

Zweckmäßigerweise wird zur Erhöhung der Sicherheit gegen Fälschungen bei der Aufnahme des Sicherheitshologramms ein verzerrter Referenzstrahl verwendet. Aus dem ausgehend von dem Masterhologramm hergestellten Sicherheitshologrammen kann ein Fälscher praktisch nicht das identische Masterhologramm rekonstruieren, da er hierzu den bei der Aufnahme der Sicherheitshologramme verwendeten Referenzstrahl benötigt, der beispielsweise in nicht reproduzierbarer Weise leicht verzerrt werden kann.

Die erfindungsgemäßen Sicherheitshologramme können als Reflexionshologramme oder aber auch als Transmissionshologramme aufgenommen werden.

Zur Massenherstellung von dem Echtheitsnachweis dienenden Sicherheitshologrammen wird aus dem Masterhologramm zum Beispiel nach bekannten Verfahren ein Prägestempel hergestellt und mit diesem können die Sicherheitshologramme nach ebenfalls bekannten Verfahren in aluminisierte oder auch transparente Kunststoffschichten geprägt werden.

Ein wirksamer Schutz der Sicherheitshologramme gegen Kopieren ergibt sich daraus, daß diese in eine mit Farbverläufen versehene Folie geprägt werden. Der Farbverlauf ist vorzugsweise in die Prägelackschicht einzubringen. Die Farbverläufe sollen in mehreren Bereichen als Streifen, Punkte oder Grafiken in mindestens zwei Farben ausgeführt sein.

Unter Farbverläufen sind Streifen oder Felder unterschiedlicher Farben zu verstehen, wobei die Farben auch in Form von Farbkeilen eingebracht werden können und wobei die Farben auch innerhalb eines Streifens oder Feldes ihre Wellenlänge (Farbe) oder Farbdichte ändern können. Als Farbverläufe können Grafiken, Punkte oder aber auch besondere Effekte hervorrufende Muster verwendet werden. Graphiken oder aber auch besondere Effekte hervorrufende Muster können im Farbverlauf dargestellt sein. Eine andere oder zusätzliche Möglichkeit ist, daß sich die Farben mit den Betrachtungswinkeln des Hologramms ändern, wie es z. B. bei Farben dünner Schichten, die durch Interferenz entstehen, der Fall ist.

Es sollten mindestens drei Farben vorhanden sein, wobei volle Transparenz der Trägerschicht als Farbe gelten kann. Wenn überhaupt, ließe sich ein derart gesichertes Hologramm nur mit sehr aufwendigen Kopierverfahren mit den Farben entsprechenden Farbstofflasern kopieren, wobei sich selbst bei geschickten Kopierversuchen Helligkeitsunterschiede auf der Kopie kaum vermeiden lassen dürften und insbesondere die Farbgrenzen als Linien sichtbar bleiben würden. Würde mit einer Kopie in eine gleiche oder ähnliche mit einem Farbmuster versehene Folie das Hologramm geprägt, würde sich ein Hologramm ergeben, das ein dem Farbmuster überlagertes Helligkeits-Linien-Muster aufweist.

Besonders zweckmäßig werden als Farbmuster aperiodische Wellenlinienmuster aus Farblinien verwendet, bei dem sich keine Linien kreuzen. Bei einem Kopieren würde das Linienmuster auf die Kopie übertragen. Beim erneuten Prägen der Kopie in eine Trägerfolie mit einem gleichen oder ähnlichen Wellenlinienmuster würde sich ein Hologramm mit Überkreuzungen von Farb- und Helligkeitslinien ergeben, die als Erkennungsmerkmal für eine Fälschung dienen können (Moire-Muster). Bei ausreichend feiner Linienstruktur entsteht durch die Überlagerung der unterschiedlichen Linienstrukturen von Folie, Farblinien und Hologrammkopie mit den Helligkeitslinien ein Moire-Effekt, an dem die Fälschung leicht zu erkennen wäre. Ebenso sind aus dem Banknoten- und Wertpapierdruck bekannte sogenannte "Guillochen"-Linienmuster anwendbar.

Die Farbstrukturen können als Bild, Foto, Grafiken oder auch als Punktmuster mit zufälliger Verteilung oder als Schrift ausgestaltet sein. Die Farbpunkte müssen nicht unbedingt scharf abgegrenzt sein, sondern können auch einen fließenden Farbübergang aufweisen.

Die Farbverläufe können auch mit Hilfe von Heißprägefolien aufgebracht werden. Hierzu wird auf eine Trägerfolie über eine Trennklebeschicht ein Prägelack aufgebracht. Dieser Prägelack ist mit einer aufgedampften Aluminiumschicht versehen. In diese Schicht wird sodann mittels des aus dem Masterhologramm hergestellten Prägestempels das Hologrammrelief geprägt. Auf diese geprägte Schicht mit dem Relief wird sodann eine Heißklebeschicht (Sizing/Grundur) aufgebracht. Zusammen mit einem Druckstempel wird sodann der so gebildete Compound auf eine Trägerschicht aus Papier- oder Kunststoffolie aufgedrückt. Bei dieser Trägerschicht kann es sich beispielsweise um das zu sichernde Dokument handeln. Dieses Aufpressen geschieht ebenfalls unter Wärme, so daß eine Trennung in der Trennklebeschicht entsteht. Die Grundur vermittelt sodann die Verbindung zu der Trägerschicht, wobei die Trennklebeschicht durch die Wärmeeinwirkung zerstört wird, so daß die Prägelackschicht die äußere Schicht bildet.

Die Farbverläufe können bereits in die Prägelackschicht eingebracht werden. Es kann natürlich auch eine weitere Schicht mit dem Farbverlauf aufgebracht werden. Sämtliche Schichten können transparent sein.

Das Hologrammrelief kann mittels des Prägestempels auch in eine unbedampfte Kunststoffolie eingeprägt werden, wobei sich dann aufgrund der unterschiedlichen Brechungsindizes der miteinander verbundenen Schichten ein Reflexionshologramm ergibt.

Alternativ kann auch eine extrem dünne Aluminiumschicht auf eine Kunststoffolie aufgebracht werden, die dann teilweise transparent bleibt.

Die Massenherstellung von dicken Hologrammen vom Masterhologramm kann zum Beispiel durch Kontaktkopieren mit einem Scanbelichtungsprozeß in bekannter Weise erfolgen.

Die vom Masterhologramm hergestellten identischen Massenhologramme sind durch das Einprägen des Hologramms in mit unterschiedlichen Farbbereichen versehene transparente Folien oder das Einbelichten der Hologramme und anschließendes Schrumpfen und Schwellen gegen Kopieren geschützt. Dieser Schutz reicht aber grundsätzlich noch nicht aus, um zu verhindern, daß das Hologramm von geschickten Fälschern nachgestellt wird. Aus diesem Grunde ist das Hologramm noch durch eine Verschlüsselung geschützt, die aus dem Hologramm eines zufällig strukturierten optischen Elements, beispielsweise einer Mattscheibe, besteht.

Da also die aus dem Masterhologramm hergestellten Massenhologramme eine verschlüsselte Hologramminformation besitzen, müssen besondere Lesegeräte geschaffen werden, mit denen sich die Hologramme als echt erkennen lassen. Ein derartiges Lesegerät zum Prüfen der Echtheit von aus dem Masterhologramm hergestellten Hologrammkopien zeichnet sich erfindungsgemäß dadurch aus, daß in einer vorgegebenen optischen Anordnung mit einem Laser, vorzugsweise einer Laserdiode, ein Hologramm des Masterhologramms mit einem Referenzstrahl hergestellt wird, der eine lesbare Information enthalten kann, und daß das Lesegerät identisch die bei der Aufnahme verwendete optische Anordnung besitzt, wobei die zu prüfende Hologrammkopie an die Stelle des Masterhologramms gebracht wird. In dem Lesegerät bildet somit das Hologramm des Masterhologramms das Entschlüsselungshologramm zur Erkennung der Echtheit zu prüfender Hologrammkopien. Wird in dem Lesegerät das zu prüfende Hologramm mit dem auch bei der Aufnahme des Entschlüsselungshologramms verwendeten Referenzstrahl beleuchtet, so wird aus dem zu prüfenden Hologramm ein die Hologramminformation enthaltender Objektstrahl rekonstruiert, der aus dem Entschlüsselungshologramm bei der Echtheit des zu prüfenden Hologramms den bei der Aufnahme verwendeten Referenzstrahl rekonstruiert. Dieser Referenzstrahl kann eine ebene Welle sein oder aber auch eine lesbare Information enthalten. Dieser Referenzstrahl kann automatisch durch ein lichtempfindliches optisches Element auf Echtheit geprüft werden.

Die Besonderheit des erfindungsgemäßen Lesegeräts besteht darin, daß aus dem in diesem enthaltenen Entschlüsselungshologramm das Masterhologramm bzw. die von diesem hergestellten echten Hologrammkopien nicht abgeleitet werden können. Da das Entschlüsselungshologramm selbst bei der Wahl einer richtigen Referenz die Toleranzen und Besonderheiten des individuell hergestellten Lesegeräts aufweist, ließe sich aus diesem höchstens ein Hologramm erstellen und kopieren, das die individuellen Merkmale des speziellen Lesegeräts aufweist. Ein derartiges aus dem Entschlüsselungshologramm kopiertes Hologramm könnte höchstens bei großer Geschicklichkeit in dem Lesegerät, aus dem es kopiert worden ist, ein funktionierendes Hologramm produzieren, nicht aber auch in anderen Lesegeräten, die andere individuelle herstellungs- und toleranzbedingte Abweichungen aufweisen.

Eine Rekonstruktion des Masterhologramms aus dem Entschlüsselungshologramm ist nicht nur wegen der durch das individuelle Lesegerät bedingten Verzerrungen erschwert oder unmöglich, sondern auch deshalb, weil ein eventueller Fälscher beim Zurückkopieren den Lesestrahl des Lesegeräts als Referenzstrahl verwenden würde.

In weiterer Ausgestaltung der Erfindung ist vorgesehen, daß bei der Aufnahme des Entschlüsselungshologramms "in situ" in dem Lesegerät die Kopie des Masterhologramms unter Verwendung einer Fourierlinse in der Fourierebene hergestellt wird. Die Verwendung einer bekannten Fourier-Optik hat den Vorteil, daß eine Abbildung des Hologramms durch parallele Strahlen ins Unendliche erfolgt. Diese Anordnung gestattet es, bei dem Einlegen des zu prüfenden Hologramms Verschiebungen in den X- und Y-Richtungen vorzunehmen, ohne daß die Hologrammrekonstruktion darunter leidet, weil aufgrund der hohen Redundanz jeder Punkt zur Rekonstruktion der zugehörigen Ortsfrequenzen auf die entsprechenden Gitterstrukturen des Hologramms trifft und eine Rekonstruktion des Hologramms erfolgt. Allerdings muß das zu prüfende Hologramm mit richtiger Drehstellung eingegeben werden. Diese läßt sich in einfacher Weise dadurch erhalten, daß bei der Prüfung das Hologramm langsam gedreht wird, so daß es einmal in die richtige Winkelstellung gelangt was ein Aufblitzen des die Echtheit zeigenden, aus dem Entschlüsselungshologramm rekonstruierten Referenzstrahls bewirkt.

Eine zusätzliche Sicherheit dagegen, daß sich aus dem Entschlüsselungshologramm des Lesegeräts nicht das Masterhologramm rekonstruieren läßt, läßt sich dadurch erreichen, daß das Entschlüsselungshologramm in jedem Lesegerät um einen unterschiedlichen Winkel gekippt wird.

Ein Ausführungsbeispiel der Erfindung wird nachstehend anhand der Zeichnung näher erläutert. In dieser zeigt
- Fig. 1: eine Anordnung zur Aufnahme eines Masterhologramms mit einer in diesem codierten, aus einem zufällig strukturierten optischen Element bestehenden Hologramminformation in schematischer Darstellung,
- Fig. 2: eine Anordnung zur Herstellung eines Lesegeräts in schematischer Darstellung.

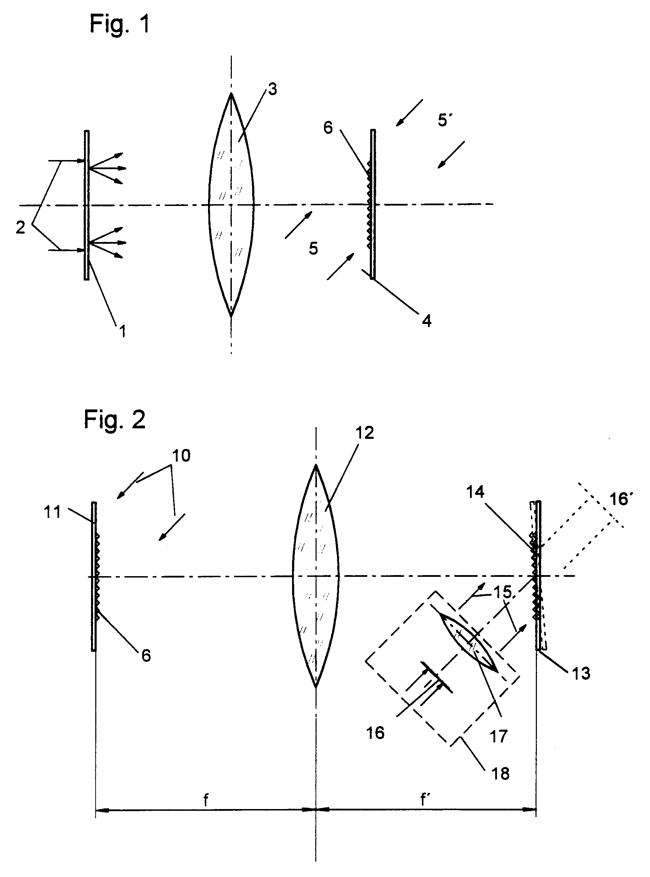

Fig. 1 zeigt in schematischer Darstellung die Aufnahme eines Masterhologramms, in dem die zufällige Struktur der als Objekt verwendeten Mattscheibe 1 kodiert ist. Die Mattscheibe 1 wird mit dem von einem Laser abgeleiteten Objektstrahl 2 durchleuchtet. Durch die Abbildungsoptik 3, die aus einer bekannten Fourier-Optik besteht, werden die zueinander parallelen Objektstrahlen (Abbildung ins Unendliche) in der Hologrammebene 4 mit einem verzerrten oder auch einem beliebig reproduzierbaren Referenzstrahl 5 zur Interferenz gebracht, so daß auf dem in der Hologrammebene 4 angeordneten Fotomaterial 6 das Masterhologramm entsteht. Je nachdem, von welcher Seite der Referenzstrahl auf die Hologrammebene fällt, wird ein Reflexionshologramm oder ein Transmissionshologramm hergestellt. Soll ein dickes, anschliessend zu schrumpfendes und/oder zu schwellendes Hologramm hergestellt werden, wird dieses zweckmäßigerweise als Reflexionshologramm mit dem Referenzstrahl 5' hergestellt.

Aus dem Masterhologramm 6 werden anschließend nach üblichen Vervielfältigungsverfahren in Massenherstellung dem Echtheitsnachweis dienende Hologramme hergestellt.

Aus dem Masterhologramm oder einer Kopie des Masterhologramms wird anschließend mit der aus Fig. 2 ersichtlichen Anordnung das Lesegerät hergestellt. Dieses besitzt eine Laserlichtquelle, vorzugsweise eine Laserdiode, aus der der Referenzstrahl 10 abgeleitet wird, mit dem aus der in der Prüfebene 11 angeordneten Masterhologramm 6 ein Hologramm rekonstruiert wird, wobei die rekonstruierte Objektwelle durch die Abbildungsoptik 12, die ebenfalls aus einer Fourier-Optik besteht, in der Hologrammebene 13 abgebildet wird, in der die rekonstruierte Objektwelle mit einem aus dem Laser abgeleiteten Referenzstrahl 5 zur Interferenz gebracht wird, der zusätzlich eine Information enthalten kann, die als Abbildung 16' über die Abbildungsoptik 17 als Abbildung 16 projeziert wird. Auf diese Weise wird in der Hologrammebene 13 ein Entschlüsselungshologramm 14 "in situ" erstellt, das an gleicher Stelle in dem individuellen Lesegerät verbleibt. Das Entschlüsselungshologramm ist also nicht identisch mit dem Masterhologramm 6, da dieses nicht mit dem Referenzstrahl 5, sondern einem lesegerätindividuellen Referenzstrahl 10 rekonstruiert worden ist und außerdem die vorher transformierte Objektwelle darstellt. Wird nun in dem derart hergestellten Lesegerät in die Eingabeebene 11 das zu prüfende Hologramm eingelegt, wird mit dem Objektstrahl genau der Referenzstrahl 5 rekonstruiert, so daß die in diesem gespeicherte Information als Echtheitskennzeichen sichtbar wird und auch maschinell ausgewertet werden kann.

## Patentansprüche

1. Verfahren zur Herstellung von kopier- und nachahmungssicheren, Echtheitsmerkmale aufweisenden Hologrammen, die Kopien eines Masterhologramms sind,
**dadurch gekennzeichnet,**
daß als Masterhologramm ein Hologramm eines zufällig strukturierten optischen Elements, beispielsweise einer Mattscheibe, das das Echtheitsmerkmal bildet, aufgenommen wird und daß jede von dem Masterhologramm gezogene Hologrammkopie mit einer mindestens einen Farbverlauf aufweisenden Schicht versehen wird und/oder die auf eine dicke lichtempfindliche Schicht aufgenommene Hologrammkopie geschrumpft oder geschwellt wird.

2. Verfahren nach Anspruch 1, dadurch gekennzeichnet, daß das Masterhologramm mit einem verzerrten Referenzstrahl aufgenommen wird.

3. Verfahren nach Anspruch 1 oder 2, dadurch gekennzeichnet, daß aus dem Masterhologramm ein Prägestempel hergestellt und daß das dem Echtheitsnachweis dienende Hologrammrelief in eine transparente Kunststoffschicht geprägt wird.

4. Verfahren nach Anspruch 3, dadurch gekennzeichnet, daß die Kunststoffschicht mehrere Bereiche und/oder Streifen mit mindestens 2 Farben aufweist.

5. Verfahren nach Anspruch 4, dadurch gekennzeichnet, daß die Kunststoffschicht mit mindestens einem aus Farblinien bestehenden Muster, vorzugsweise einem Wellenlinienmuster, versehen wird.

6. Verfahren nach Anspruch 5, dadurch gekennzeichnet, daß die Kunststoffschicht mit einem Wellenlinienmuster versehen wird, deren Linien sich nicht kreuzen.

7. Verfahren nach Anspruch 3, dadurch gekennzeichnet, daß die Farbgebung der Kunststoffschicht durch Interferenz dünner Schichten erzeugt wird.

8. Lesegerät zum Prüfen der Echtheit der nach den Verfahren gemäß den Ansprüchen 1 bis 7 hergestellten Hologrammkopien,
**dadurch gekennzeichnet,**
daß in einer vorgegeben optischen Anordnung mit einem Laser, vorzugsweise mit einer Laserdiode, ein Hologramm (Entschlüsselungshologramm) des Masterhologramms mit einem Referenzstrahl hergestellt wird, der eine lesbare Information enthalten kann, und daß das Lesegerät identisch die bei der Aufnahme verwendete optische Anordnung besitzt, wobei die zu prüfende Hologrammkopie an die Stelle des Masterhologramms bei der Herstellung des Entschlüsselungshologramms gebracht wird.

9. Lesegerät nach Anspruch 8, dadurch gekennzeichnet, daß das Entschlüsselungshologramm unter Verwendung einer Fourier-Linse in der Fourier-Ebene aus dem Masterhologramm hergestellt wird.

10. Lesegerät nach Anspruch 8 oder 9, dadurch gekennzeichnet, daß das Entschlüsselungshologramm vor seiner Herstellung in dem Lesegerät unterschiedlich gekippt wird.
